# EUROPÄISCHE PATENTANMELDUNG

(11) **EP 1 028 508 A2**
(43) Veröffentlichungstag der Anmeldung: **16.08.2000**
(21) Anmeldenummer: 99126114.0
(22) Anmeldetag: 29.12.1999
(51) Int. Cl.: H02G 3/00, E04F 17/08

(54) **Installationssystem zur Ver- und/oder Entsorgung von Gebäuden**

(30) Priorität: 09.02.1999 DE 29902090 U
(71) Anmelder: Tehalit GmbH, D-67716 Heltersberg (DE)
(72) Erfinder: Schmitt, Dieter, Dipl.-Ing., 66440 Altheim (DE); Krietemeyer, Rolf, Dipl.-Ing., 67663 Kaiserslautern (DE)
(74) Vertreter: Patentanwälte Möll und Bitterich

(57) **Zusammenfassung**

Ein Installationssystem zur Vor- und/oder Entsorgung von Gebäuden mit Energie, die in Rohrleitungen und/oder Elektroleitungen transportiert wird, mit Wasser, Abwasser, Heizung, Heißwasser, Heizöl, Dampf, technischen Gasen, Pressluft und/oder Vakuum sowie mit Telefon-, Radio-, Fernseh-, Daten- und weiteren Signalen umfasst wenigstens einen Unterputz-Steigleitungskanal (1), der das Rückgrat des Installationssystems bildet, wenigstens einen vorbereiteten zentralen Montageplatz (5) für einen Zählerkasten (6), wenigstens einen vorbereiteten Montageplatz (4) für einen Etagen-Verteilerkasten (7) und Abgangsöffnungen (2) zur Etagen-Installation, die mit Hilfe von Installationskanälen (3) ausgeführt wird. Etagen-Verteilerkasten (7) und Zählerkasten (6) sind bestückt und vorverdrahtet. Die Befestigung erfolgt durch Aufstecken oder -klemmen auf den jeweiligen Montageplatz (4,5).

## Beschreibung

Die Erfindung betrifft Installationssysteme zur Ver- und/oder Entsorgung von Gebäuden mit Energie, die in Rohrleitungen und/oder Elektroleitungen transportiert wird, auch mit Wasser, Abwasser, Heizung, Heißwasser, Heizöl, Dampf, technischen Gasen, Pressluft und/oder Vakuum, sowie mit Telefon-, Radio-, Fernseh-, Daten- und dergleichen Signalen gemäß dem Oberbegriff des Anspruchs 1.

Neubau und Renovierung von Gebäuden nach dem derzeit üblichen handwerklichen System sind zeit- und kostenraubende Maßnahmen. Die Gründe hierfür sind vielfältig. Ein Grund für die zu beobachtende Kostenexplosion ist, dass eine Vielzahl der baulichen Tätigkeiten auf der Baustelle selbst in handwerklicher Arbeit erbracht wird. Wenn es gelänge, möglichst viele der Bautätigkeiten in weitaus rationellerer und preiswerterer Industriearbeit zu erbringen, wäre eine Reduzierung der Kosten die Folge.

Ein bedeutender Teil des Innenausbaus ist die Installation in einem Gebäude. Hierzu werden in vielen Fällen noch vom Keller bis zum Speicher Schlitze geklopft und gefräst, Rohre oder Leitungen verlegt, die Schlitze wieder zugegipst, Armaturen und Dosen gesetzt, elektrische Leitungen eingezogen und abisoliert, Zähler und Verteilerkästen gesetzt, bestückt und verdrahtet usw.

In Büro- und Industriebauten, die unter Verwendung von Betonfertigteilen errichtet werden, werden Teile der Installation auch bereits im Betonwerk eingearbeitet. Auch in diesen Fällen müssen noch viele Handgriffe auf der Baustelle selbst erledigt werden. Eine Installation, die in Betonfertigteilen eingearbeitet ist, ist nachträglich praktisch nicht mehr zu verändern.

Neben der soeben beschriebenen Unterputz-Installation gibt es seit über 100 Jahren auch die Verlegung von Rohrleitungen und elektrischen Leitungen in Leitungsführungskanälen, die auf Putz verlegt werden. Leitungsführungskanäle werden bevorzugt in Büro- und Industriebauten verwendet, aber auch in renovierten Wohngebäuden. Leitungsführungskanäle können auch mit Elektro-Installationsgeräten wie Steckdosen, Lichtschaltern und Sicherungsautomaten bestückt werden.

Außer den ganz auf Putz verlegten Leitungsführungskanälen gibt es auch solche, die teilweise in den Putz verlegt werden, so dass nur noch der Frontbereich sichtbar ist. Diese Kanäle sind wiederum hauptsächlich für Neubauten bestimmt.

Für die Versorgung der einzelnen Etagen eines Gebäudes z. B. mit elektrischer Energie wurde ursprünglich eine einzelne Steigleitung zwischen Keller und Speicher verlegt, von der aus je eine Abzweigleitung pro Abnehmer zu einem Verbrauchszähler geführt wird. Hinter dem Verbrauchszähler sind die Sicherungen angeordnet, von denen die Versorgungsleitungen als Stichleitungen zu den einzelnen Verbrauchsstellen geführt werden. In der modernen Gebäude-Installation wird jedoch verlangt, dass sämtliche Verbrauchszähler an einem zentralen, für das Elektro-Versorgungsunternehmen leicht zugänglichen Platz angeordnet werden, meist in einem Hausanschlußraum im Keller. Von jedem Verbrauchszähler führt dann eine Steigleitung zu den jedem Abnehmer zugeordneten Sicherungskasten, Unterverteilern usw. Gleiches gilt auch für die Versorgung mit Wasser, Heizung, Heißwasser, technischen Gasen usw. Dies ist unbefriedigend.

Der vorliegenden Erfindung liegt daher die Aufgabe zugrunde, ein Installationssystem anzugeben, welches in großen Teilen industriell vorgefertigt werden kann und auf der Baustelle selbst nur noch montiert und gegebenenfalls komplettiert werden muss.

Diese Aufgabe wird gelöst durch ein Installationssystem mit den Merkmalen des Anspruchs 1.

Das erfindungsgemäße System geht aus von einem Unterputz-Steigleitungskanal, der sozusagen das Rückgrat des gesamten Systems darstellt Dieser Steigleitungskanal nimmt nicht nur sämtliche Rohrleitungen und Elektroleitungen auf, wie das teilweise bereits jetzt schon der Fall ist, sondern enthält auch vorbereitete Montageplätze für die Verbrauchszähler sowie für die Etagen-Verteilerkästen. Außerdem enthält er bereits fertig vorbereitete Abgangsöffnungen, die an die Leitungsführungskanäle angepaßt sind, die die Leitungen in der jeweiligen Verbrauchseinheit, d. h. Büro oder Wohnung, verteilen.

Das fabrikmäßig unter günstigen Fertigungsbedingungen auf Maß hergestellte Installationssystem ist auf der Baustelle schnell montiert, und zwar auch von Hilfskräften oder fachfremden Kräften, da für diese reinen Montagetätigkeiten keine gelernten Handwerker benötigt werden.

Gemäß einer Ausgestaltung der Erfindung sind Steigleitungskanal und Leitungsführungskanäle vorverdrahtet bzw. vorverrohrt. Dadurch wird die Montage noch mehr beschleunigt und vereinfacht.

Gemäß einer bevorzugten Weiterbildung der Erfindung ist jeder Etagen-Verteilerkasten bestückt und vorverdrahtet bzw. vorverrohrt, besitzt Klemmen und/oder Buchsen zum Anschließen der vorbereiteten Leitungsenden und läßt sich auf seinen Montageplatz einfach aufrasten oder -klemmen. In diesem Fall werden die normalerweise zeitraubenden Verrohrungs- bzw. Verdrahtungsarbeiten in der Fabrik entsprechend den Vorgaben des Architekten oder Bauherrn rationell erledigt, die Montagezeit auf der Baustelle selbst dadurch entscheidend reduziert .

Gemäß einer anderen Weiterbildung der Erfindung ist der zentrale Zählerplatz ebenfalls bestückt und vorverrohrt bzw. vorverdrahtet, besitzt Klemmen und/oder Buchsen zum Anschließen der vorbereiteten Leitungsenden und läßt sich auf seinen Montageplatz aufrasten oder -klemmen. Ein solcher Zählerplatz enthält nicht nur die Verbrauchszähler, sondern auch die Hauptsicherungen und die Anschlußklemmen für die Signalleitungen, so dass die Verbindung zu den öffentlichen Versorgungsnetzen mit einem einzigen Schraub- oder Steckvorgang erledigt ist.

Gemäß einer Ausgestaltung der Erfindung besitzt der Steigleitungskanal einen Mantel aus Blech, Duroplast oder Thermoplast, der geöffnet werden kann. Dies verleiht dem Steigleitungskanal eine erhöhte Festigkeit und Sicherheit gegen Beschädigungen, ermöglicht aber andererseits auch die nachträgliche Veränderung der Elektroinstallation.

Bevorzugt ist auch der Einsatz von Feuertest-Kanälen.

Für die auf den Etagen verwendeten Leitungsführungskanäle eignen sich bevorzugt Sockelleistenkanäle oder auch Deckenkanäle. Sockelleistenkanäle eignen sich insbesondere für Wohnungen, Deckenkanäle eher für Nebenräume. Es versteht sich, dass auch alle anderen Arten von Leitungsführungskanälen für das erfindungsgemäße System geeignet sind.

Gemäß einer Ausgestaltung der Erfindung sind die verwendeten Leitungsführungskanäle und insbesondere die Sockelleistenkanäle auf Putz oder auch teilweise unter Putz verlegt. Dadurch haben diese Kanäle einen geringen Platzbedarf und bieten im allgemeinen einen ästhetisch befriedigenden Anblick.

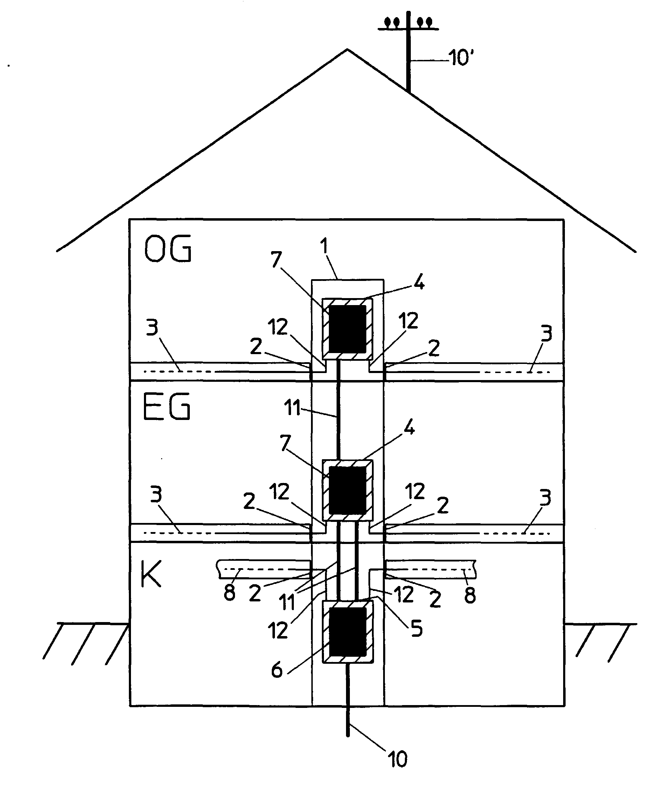

Anhand der Zeichnung soll die Erfindung in Form eines rein schematisch dargestellten Ausführungsbeispiels näher erläutert werden.

Man erkennt ein Gebäude, bestehend aus Keller K, Erdgeschoss EG und Obergeschoss OG. Der Anschluss dieses Gebäudes an die öffentlichen Versorgungsnetze erfolgt über Rohr- und Elektroleitungen 10, die in der Erde verlegt sind, gegebenenfalls auch über eine elektrische Freileitung 10'.

In dem Gebäude ist rein schematisch die Installation dargestellt. Man erkennt zunächst einen vom Keller K bis zum Obergeschoss OG verlegten Unterputz-Steigleitungskanal 1, der das Rückgrat der gesamten Installation bildet Dieser besitzt wenigstens einen vorbereiteten Montageplatz 5 für wenigstens einen Zählerkasten und in jeder Etage wenigstens einen vorbereiteten Montageplatz 4 für einen Etagen-Verteilerkasten 7. In den Seitenwänden des Steigleitungskanals 1 sind Abgangsöffnungen 2 vorgesehen, die die Verbindung zur Etagen-Installation herstellen. Die im Steigleitungskanal 1 verlegten Steigleitungen 11 können Wasser und Abwasser sowie alle Arten von Gasen, Flüssigkeiten, Energien und Signale für Telefon, Fernsehen usw. führen.

Die Etagen-Installation erfolgt mit Hilfe von Leitungsführungskanälen 3, beispielsweise Sockelleistenkanälen, die an den Abgangsöffnungen 2 des Steigleitungskanals 1 beginnen und die von den Verteilerkästen ausgehenden Leitungen 12 zu jeder Verbrauchsstelle führen. Im Keller K erfolgt die Etagen-Installation mit Hilfe von einfacheren Deckenkanälen 8, die ebenfalls an jeweils einer Abgangsöffnung 2 des Steigleitungskanals 1 beginnen.

Zählerkasten 6 und Verteilerkasten 7 sind vom Hersteller bereits komplett bestückt und ganz oder teilweise verrohrt bzw. verdrahtet. Um die vorbereiteten Leitungsenden anschließen zu können, können Klemmen, Buchsen oder Steckkontakte vorgesehen sein. Sind die Montageplätze 4, 5 einerseits und die Zähler- und Verteilerkästen 6, 7 andererseits mit Steckkontakten bzw. -buchsen ausgerüstet, lassen sich die Kästen einfach aufstecken und verrasten. Lediglich die Verbindung mit den öffentlichen Versorgungsnetzen muss dann noch in handwerklicher Einzelarbeit hergestellt werden, was jedoch dank vorbereiteter Rohrschellen, Klemmen, Buchsen und Steckverbindungen in kürzester Zeit erledigt ist.

## Patentansprüche

1. Installationssystem zur Ver- und/oder Entsorgung von Gebäuden mit Energie, die in Rohrleitungen und/oder Elektroleitungen transportiert wird, auch mit Wasser, Abwasser, Heizung, Heißwasser, Heizöl, Dampf, technischen Gasen, Pressluft und/oder Vakuum, sowie mit Telefon-, Radio-, Fernseh-, Daten- und dergleichen Signalen, im wesentlichen umfassend
- einen zentralen Gebäudeanschlußkasten,
- wenigstens einen zentralen oder dezentralen Zählerplatz (6),
- wenigstens eine Steigleitung (11),
- wenigstens einen Etagen-Verteilerkasten (4)
- und wenigstens eine unter Verwendung von Leitungsführungskanälen (3, 8) ausgeführte Etagen-Installation, gekennzeichnet durch die Merkmale:
- ein zentraler Unterputz-Steigleitungskanal (1) besitzt
-- wenigstens einen vorbereiteten zentralen Montageplatz (5) für den wenigstens einen Zählerkasten (6),
-- wenigstens einen vorbereiteten Montageplatz (4) für wenigstens einen Etagen-Verteilerkasten (7)
-- und Abgangsöffnungen (2) zu der Etagen-Installation,
- die Steigleitung (11) umfaßt Leitungen für Gase, Flüssigkeiten, Energien und/oder für Signale.

2. Installationssystem nach Anspruch 1, gekennzeichnet durch die Merkmale:
- der Etagen-Verteilerkasten (7)
-- ist bestückt und vorverdrahtet,
-- besitzt Klemmen und/oder Buchsen zum Anschließen der vorbereiteten Enden der Leitungen,
-- und läßt sich auf seinem Montageplatz (4) aufstecken oder -klemmen.

3. Installationssystem nach Anspruch 1 oder 2, gekennzeichnet durch die Merkmale:
- der Zählerkasten (6)
-- ist bestückt und vorverdrahtet,
-- besitzt Klemmen und/oder Buchsen zum Anschließen der vorbereiteten Enden der Leitungen
-- und läßt sich auf seinen Montageplatz (5) aufstecken oder -klemmen.

4. Installationssystem nach einem der Ansprüche 1 bis 3, gekennzeichnet durch das Merkmal:
- der Steigleitungskanal (1) besitzt einen öffenbaren Mantel.

5. Installationssystem nach Anspruch 4, gekennzeichnet durch das Merkmal:
- der Steigleitungskanal (1) besitzt einen Mantel aus Blech, Duroplast oder Thermoplast.

6. Installationssystem nach einem der Ansprüche 1 bis 4, gekennzeichnet durch das Merkmal:
- der Steigleitungskanal (1) ist als Feuerfest-Kanal ausgeführt.

7. Installationssystem nach einem der Ansprüche 1 bis 6, gekennzeichnet durch das Merkmal:
- die auf den Etagen verwendeten Leitungsführungskanäle (3) sind Sockelleistenkanäle.

8. Installationssystem nach einem der Ansprüche 1 bis 6, gekennzeichnet durch das Merkmal:
- die auf den Etagen verwendeten Leitungsführungskanäle (3) sind Deckenkanäle.

9. Installationssystem nach einem der Ansprüche 1 bis 8, gekennzeichnet durch das Merkmal:
- die verwendeten Leitungsführungskanäle (3, 8) sind auf Putz oder auch teilweise unter Putz verlegt

10. Installationssystem nach einem der Ansprüche 1 bis 9, gekennzeichnet durch das Merkmal:
- der Steigleitungskanal (1) ist bestückt und vorverdrahtet.
